# EUROPEAN PATENT SPECIFICATION

(11) **EP 3 281 465 B1**
(45) Date of publication and mention of the grant of the patent: **27.01.2021**
(21) Application number: 15888171.4
(22) Date of filing: 10.04.2015
(51) Int. Cl.: H04W 72/04, H04L 5/00, H04W 72/12, H04L 1/00

(54) **DECODING IN NETWORKS USING CARRIER AGGREGATION**
DECODIERUNG IN NETZWERKEN UNTER VERWENDUNG VON TRÄGERAGGREGATION
DÉCODAGE EN RÉSEAUX PAR AGRÉGATION DE PORTEUSES

(43) Date of publication of application: 14.02.2018
(73) Proprietor: Telefonaktiebolaget LM Ericsson (PUBL), 164 83 Stockholm (SE)
(72) Inventor: LIU, Jinhua, Beijing 100102 (CN); FAN, Rui, Beijing 100102 (CN); LI, Shaohua, Beijing 100102 (CN); LU, Qianxi, Beijing 100102 (CN); SONG, Xinghua, Beijing 100102 (CN)
(74) Representative: Zacco Sweden AB
(86) International application number: PCT/CN2015/076254
(87) International publication number: WO 2016/161614

(56) References cited:
- CN-A- 101 801 090
- CN-A- 101 801 093
- CN-A- 102 111 851
- US-B2- 8 718 662
- LG ELECTRONICS: "PDCCH structure for multiple carrier aggregation in LTE-Advanced", 3GPP DRAFT; R1-092237 LTEA_PDCCH STRUCTURE_REV, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090508, 8 May 2009 (2009-05-08), XP050339657, [retrieved on 2009-05-08]
- QUALCOMM INCORPORATED: "Cross-carrier scheduling for up to 32 component carriers", 3GPP DRAFT; R1-150470 CROSS-CARRIER SCHEDULING FOR UP TO 32 CCS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933678, Retrieved from the Internet: URL:http://www.3gpp.org/ftp/Meetings_3GPP_ SYNC/RAN1/Docs/ [retrieved on 2015-02-08]
- LG ELECTRONICS: "DL related issues for supporting CA of up to 32 carriers", 3GPP DRAFT; R1-150208 ECA DL RELATED ISSUES_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933422, Retrieved from the Internet: URL:http://www.3gpp.org/ftp/Meetings_3GPP_ SYNC/RAN1/Docs/ [retrieved on 2015-02-08]
- ZTE: "PDCCH/EPDCCH enhancements for Carrier Aggregation", 3GPP DRAFT; R1-150137 PDCCHEPDCCH ENHANCEMENTS FOR CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Athens, Greece; 20150209 - 20150213 8 February 2015 (2015-02-08), XP050933351, Retrieved from the Internet: URL:http://www.3gpp.org/ftp/Meetings_3GPP_ SYNC/RAN1/Docs/ [retrieved on 2015-02-08]
- ERICSSON: "DL control signaling enhancements for up to 32 CCs", 3GPP DRAFT; R1-150323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933533, Retrieved from the Internet: URL:http://www.3gpp.org/ftp/Meetings_3GPP_ SYNC/RAN1/Docs/ [retrieved on 2015-02-08]

## Description

### Technical Field

The present invention relates to a method for processing control information at a mobile entity in a mobile communications network using carrier aggregation and to the corresponding mobile entity. The invention furthermore relates to a method for transmitting control information by a base station to a plurality of mobile entities and the corresponding base station.

### Background

The use of LTE carrier aggregation (CA), introduced in Rel-10 and enhanced in Rel-11, offers means to increase the peak data rates, system capacity and user experience by aggregating radio resources from multiple carriers that may reside in the same band or different bands and, for the case of inter-band TDD (Time Division Duplex) CA, may be configured with different UL/DL (uplink/downlink) configurations. In Rel-12, carrier aggregation between TDD and FDD (Frequency Division Duplex) serving cells is introduced to support UE (user equipment or mobile entity, interchangeably used to denote a UE hereinafter) connecting to them simultaneously.

In Rel-13, LAA (Licensed-Assisted Access) has attracted a lot of interest in extending the LTE carrier aggregation feature towards capturing the spectrum opportunities of unlicensed spectrum in the 5GHz band. WLAN operating in the 5GHz band nowadays already supports 80MHz in the field and 160MHz is to follow in Wave 2 deployment of IEEE 802.11ac. There are also other frequency bands, such as 3.5 GHz, where aggregation of more than one carrier on the same band is possible, in addition to the bands already widely in use for LTE. Enabling the utilization of at least similar bandwidths for LTE in combination with LAA as IEEE 802.11ac Wave 2 will support calls for extending the carrier aggregation framework to support more than 5 carriers. The extension of the CA framework beyond 5 carriers was approved to be one work item for LTE Rel-13. The objective is to support up to 32 carriers in both UL and DL.

Compared to legacy CA with up to 5 DL/UL CCs, the amount of scheduling information for both uplink and downlink transmission canbe expected to be proportionally increased if the similar scheduling information transmission method is used for up to 32 DL/UL CCs (Component Carriers).

For the transmission of downlink/uplink data control signaling is required which enables a mobile entity to successfully receive, demodulate and decode a signal. In LTE, a Downlink Control Information (DCI) message is generated and transmitted over a Physical Downlink Control Channel (PDCCH). The downlink control information contains information about resource allocation such as the set of resource blocks or a transport format. The downlink control information can contain information for multiple UEs so that a mobile entity has to monitor a large area to extract its own control information. As a mobile entity is not explicitly informed of the detailed control channel structure, it has to blindly decode the transmitted downlink control information. The decoding at the UE's side is facilitated by dividing the search space to be searched by a mobile entity into a common search space and a mobile entity specific search space which the UE has to monitor for detecting downlink control data. The common search space is monitored by all mobile entities served by a certain base station, whereas the UE specific search space contains control information which is specific for a certain mobile entity in a cell.

According to the current specification of release 10 carrier aggregation, there are twelve blind decodings for the Common Search Space (CSS) and 32 blind decodings in the UE specific Search Space (USS) when both CSS and USS are configured in one CC. If a similar scheduling command transmission and decoding is used for scheduling up to 32 uplink/downlink component carriers, the total number of blind decodings in the UE's side can increase substantially. From 5 to 32 component carriers, the total number of blind decodings would increase from 12+5x32=172 to 12+32x32=1036 . With uplink Single User Multiple Input/Multiple Output (SU-MIMO), the blind decoding would be further increased. The more the number of DCI blind decodings or blind detections increases, the more the number of false detections increases. The DCI false detection can result in unpredicted PUSCH (Physical Uplink Shared Channel) TX for uplink and unpredictable HARQ-ACK (Hybrid Automatic Repeat Request Acknowledgement) TX for downlink.

In release 10 CA, the DCI capacity to use one component carrier as scheduling carrier for all the five component carriers is acceptable considering that there can be up to 84 CCEs (Control Channel Elements) in the PDCCH region when the Control Format Indicator (CFI) is three. The number of available CCEs could be variable depending on the configuration of PHICH (Physical Hybrid ARQ Indicator Channel), which shares the radio resource with PDCCH. For up to 32 component carriers, scheduling all 32 component carriers over a single scheduling component carrier may not be feasible due to the DCI capacity limit. Thus, multiple scheduling component carriers may be preferred. When there is only one licensed downlink component carrier, it might be not avoidable to carry DCI over unlicensed component carriers.

For scheduling of up to 32 downlink/uplink component carriers, the following two problems arise: First of all, with up to 32 downlink component carriers, the number of blind detections for DCI could heavily increase. This would also increase the UE power consumption and the DCI false detection attempts. The second problem is that when some component carriers are allowed to carry scheduling command and the UE does not exactly know which component carriers carry scheduling commands, the UE may have to tentatively decode scheduling commands over each possible component carrier. This further increases the blind detection attempts.

When the number of blind detection attempts increases, the number DCI false detection increases as well as the power consumption of the mobile entity needed for blind detection. When more PDCCH channels are used, the UE has to blindly process the radio front end processing such as A/D conversion and data storage for all configured component carriers before the DCI blind detection is finished. The power consumption required for the processing would be considerable as the UE has to carry out blind physical layer processing for all configured carriers for the whole subframe in this case.

Accordingly, a need exists to more efficiently handle blind detection in a multicarrier environment.

The document tiled " PDCCH structure for multiple carrier aggregation in LTE-advanced" from LG electronics discloses a method used for decoding of common-physical downlink control channel (C-PDCCH) based on the availability of DL component carrier (CC) indicated in a primary- physical downlink control channel (P-PDCCH).

The document titled " Cross-carrier scheduling for up to 32 component carriers" from Qualcomm incorporated discloses enhancements to the scheduling information and cross-carrier control to enable efficient operation and good scalability for eCA where the number of aggregated CCs can be large.

The document titled " DL control signaling enhancements for up to 32 CCs" discloses enhancement to DL control signalling for up to 32 components carriers.

The document tiled " DL related issues for supporting CA of up to 32 carriers" from LG electronics discusses on consideration points for DL control and management to support CA of up to 32 carriers in Rel-13.

The document tiled " PDCCH/EPDCCH enhancements for carrier aggregation" from ZTE discusses LTE carrier aggregation enhancement beyond 5 carriers.

### Summary

This need is met by the features of the independent claims. Further aspects are described in the dependent claims. Further, the invention is defined by the independent claims. Furthermore, the embodiments of the invention are those defined by the claims.

According to a first aspect, a method for processing control information at a mobile entity in a mobile communications network configured to use carrier aggregation with at least two component carriers is provided. According to one step, control information is received via a downlink control channel, wherein the control information includes transmission resource allocation information informing a plurality of mobile entities about which transmission resources the plurality of mobile entities should use. Furthermore, a scheduling indicator is received comprising information about the presence of the resource allocation information in the control information. The control information is processed in order to determine the resource allocation information in accordance with the received scheduling indicator. The scheduling indicator can help the mobile entity to more efficiently process the control information so that only those parts of the control information are processed which may contain the resource allocation information.

The invention furthermore relates to the corresponding mobile entity processing the control information as mentioned above.

Furthermore, a method for transmitting control information performed by a base station is provided, wherein the control information is transmitted to a plurality of mobile entities in the mobile communications network which is configured to use carrier aggregation with at least two component carriers. The base station determines resource allocation information indicating how transmission resources are allocated to the plurality of mobile entities by the base station. Furthermore, resource allocation information is included in the control information. A scheduling indicator comprising information about the presence of the resource allocation information in the control information is generated and the control information and the scheduling indicator are transmitted to the different mobile entities.

The invention furthermore relates to the corresponding base station. Furthermore, a computer program and a computer program product are provided. The computer program comprises program code to be executed by at least one processing unit of the mobile entity or the base station wherein execution of the program code causes the corresponding entity to perform the steps mentioned above or mentioned in more detail below. Furthermore, a computer program product comprising the program code to be executed by at least one processing unit of a mobile entity or a base station is provided, execution of the program code causing the corresponding device to perform the steps of a method discussed above or in further detail below.

Features mentioned above and features yet to be explained below may not only be used in isolation or in combination as explicitly indicated, but also in other combinations. Features and embodiments of the present application may be combined unless explicitly mentioned otherwise.

### Brief Description of the Drawings

Various features of embodiments of the present invention will become more apparent when read in conjunction with the accompanying drawings.
Fig. 1 shows a flowchart of a method according to an embodiment which helps to reduce the number of blind decoding attempts carried out by a mobile entity.
Fig. 2 shows a flowchart comprising the steps of another embodiment carried out by a mobile entity to reduce the number of blind decoding attempts.
Fig. 3 shows an example of a scheduling indicator used to reduce the number of blind decoding attempts.
Fig. 4 is another example of a scheduling indicator which helps to reduce the number of blind decoding attempts.
Fig. 5 shows a further example of a scheduling indicator containing information for several mobile entities.
Fig. 6 shows a still further example of a scheduling indicator used to efficiently reduce the number of blind decoding attempts.
Fig. 7 shows a flowchart comprising the steps carried out by a mobile entity to reduce the number of blind decoding attempts.
Fig. 8 is a schematic block diagram of a mobile entity for processing the scheduling indicator to reduce the number of blind decoding attempts.
Fig. 9 is a schematic block diagram of a base station for generating and transmitting the scheduling indicator.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings which are to be taken demonstratively only.

The drawings are to be regarded as schematic representations and elements illustrated in the drawings are not shown to scale. Rather, the various elements are represented such that their function and general purpose becomes apparent for a person skilled in the art. Any connection or coupling between functional blocks, devices, components or other physical or functional units shown in the drawings or described herein may also be implemented by indirect connection or coupling. A coupling between components may be established over a wired or a wireless connection. Functional blocks may be implemented in hardware, software, firmware or a combination thereof.

Hereinafter, techniques are described which introduce a scheduling indicator that serves to instruct the mobile entity/UE on how to process DCI blind decoding so that the DCI blind decoding attempts for a mobile entity can be reduced.

As will be described in more detail below, the scheduling indicator may have different formats and forms. In a first option, the scheduling indicator is a scheduled UE indicator, this means that it is an indicator used to indicate whether the UE is scheduled or not. In another option, the scheduling indicator is a scheduling CC indicator. In this option, the scheduling indicator is used to indicate the scheduling component carriers to a scheduled UE so that the UE only needs to process blind detection for the indicated scheduling component carriers. The mobile entity does not process the blind detection for non-indicated scheduling component carriers. The self-scheduled CC can be regarded as the scheduling CC of itself. In a third option, a scheduled CC indicator may be used in which a bitmap can be used to indicate the scheduled component carriers for a mobile entity or the number of scheduled component carriers is indicated to the mobile entity. As a fourth option, the indicator includes a number of scheduled component carriers as indicated to the mobile entity. In another option, the scheduling indicator is an indicator of the number of scheduled component carriers. Here, the scheduling indicator can be defined as the number of scheduled component carriers for a mobile entity.

In the following, the use of the scheduling indicator and its way of transmitting it from the base station to different mobile entities is described in general. Afterwards, different options for the scheduling indicator are described in more detail.

The scheduling indicator may be transmitted on one or more configured component carriers for the mobile entity. As an example, it can be carried in a subfield of a DCI to schedule one component carrier in a PDCCH region or a separate channel within PDCCH region of one component carriers may be used or, for instance, a PDCCH region of a licensed component carrier. In the following, it is assumed that a separate control channel or separate scheduling channel, also named separate Physical Scheduling Indicator Channel (PSICH), is used but it should be understood that the scheduling indicator can be transmitted in other ways. As a further example, one search space can be configured for PSICH transmission and the specific search space can be shared between FeCA (Further enhancement of Carrier Aggregation) capable mobile entities. Within the specific search space, the PSICHs for different mobile entities can take separate resources in one or multiple of time, frequency and code domains. As one instance, one PSICH may take one CCE and different PSICHs may take different CCEs or share one CCE with different orthogonal codes. Each mobile entity shall blindly decode the PSICH for it within the configured specific search space according to its UE specific configurations of PSICH.

The scheduling indicator can be carried by the corresponding control channel, e.g. PSICH, within the first a few symbols of a subframe. Based on the early detection of PSICH, the UE can further determine the scheduling component carriers that carry scheduling commands and process the blind decoding accordingly. For self-carrier scheduling, this information can be used to trigger to give up of the blind physical layer data processing and discard the stored physical layer symbols for unscheduled component carriers.

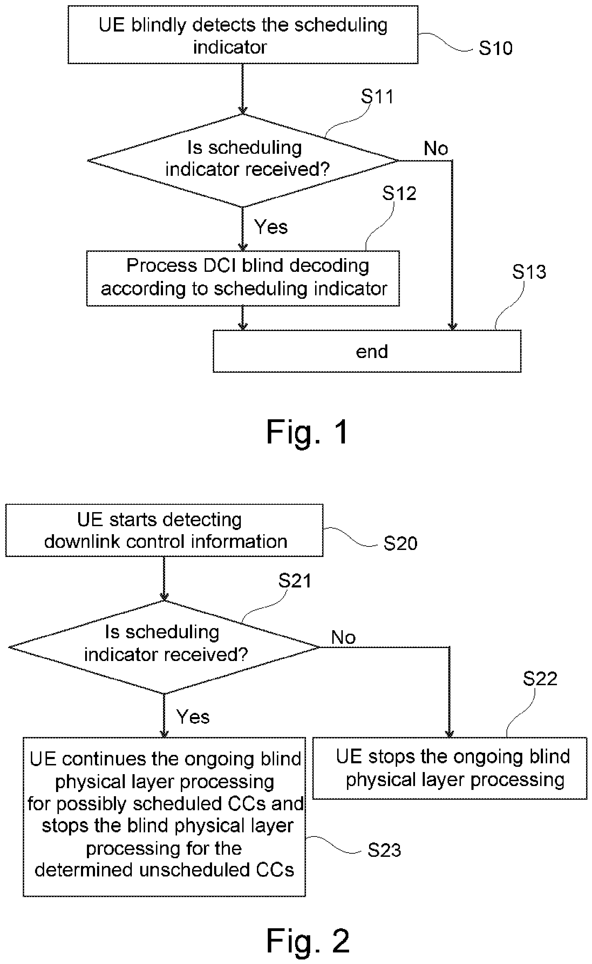

Fig. 1 illustrates an example flowchart to use the separate control channel PSICH to reduce DCI blind decoding attempts. The basic idea here is that the UE shall first decode the PSICH and the corresponding scheduling indicator before performing the DCI blind decoding attempts. Thus, in step S10, a UE blindly detects the scheduling indicator. In step 11, it is then asked whether the scheduling indicator for the UE has been received or not. If a UE has received the scheduling indicator for itself, the UE shall process the DCI blind decoding attempts with the possible further instruction known from the scheduling indicator (step S12). If however, a UE has not detected the scheduling indicator for itself, the UE does not process the DCI blind decoding and the method directly ends in steps S13.

Fig. 2. shows another example which can help to reduce the power consumption for the blind decoding. The basic method is to determine the unscheduled component carriers based on the blind detection results of the corresponding scheduling indicator. The mobile entity can then stop the physical layer processing for the determined unscheduled component carriers. A UE which has not detected a scheduling indicator or PSICH, shall assume that it is not scheduled in the transmission time interval, TTI, and hence stops blind physical layer data processing on all configured component carriers. According to step S20, the UE starts detecting downlink control data. In step S21, the UE then checks whether the scheduling indicator is received. If this is not the case, the UE stops the processing of the control information, e.g. downlink control information (step S22). If, however, a scheduling indicator is received and detected, the UE can continue in step 23 the ongoing blind physical layer processing, e.g. blind physical layer data processing, for the possible scheduled component carriers. Furthermore, a mobile entity can stop the blind detecting method for the determined unscheduled component carriers.

This can help to reduce the power consumption of the mobile entity as explained in the following example: If there are 20 users served by one cell and the corresponding base station schedules 4 users in each TTI (Transmission Time Interval), then at least 16 unscheduled users do not have to process the blind decodings. The power consumption can be reduced as there was a reduced blind physical layer data processing such as A/D conversion and data buffering if ePDCCH (enhanced PDCCH) in parallel with data symbols is used. The UE can stop the blind decoding depending on the fact if there is a scheduling indicator for it in the ahead symbols. Thus, if the scheduling indicator is transmitted in the ahead symbols of each subframe, the two above-discussed advantages are obtained.

In the following, several different forms of scheduling indicators are shown and explained in more detail.

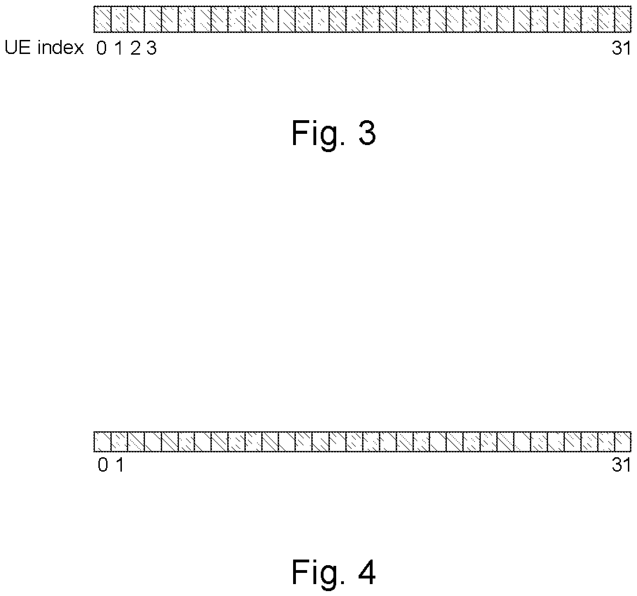

As a first option, the scheduling indicator can be defined as an indicator to indicate whether a UE is scheduled or not. In this first option, the scheduling based station tells the mobile entity if it has data for the mobile entity or not. Fig. 3 shows an example of a scheduling indicator indicating whether the scheduling indicator contains scheduling information for a UE or not when the scheduling indicator is received by different UEs. In the example shown, the format is such that multiple UEs share one downlink control channel in which the scheduling indicator is transmitted. The scheduling indicator comprises a UE index so that in the example shown it can be indicated for 32 mobile entities whether resource allocation information is present for a mobile entity or not. By way of example, if the corresponding bit for a UE is set, the UE knows that a scheduling indicator is present for itself whereas if the corresponding bit for a UE is not set, the UE can deduce that it can stop or even not start the blind decoding process. Each UE may know from higher layer information which of the bits in the format shown in Fig. 3 is the bit carrying information for itself.

In a first embodiment of this option, one scheduling indicator can be configured for one UE and the UE which has detected the scheduling indicator for itself continues with the DCI blind detection while the UE which has not detected the scheduling indicator for itself shall stop the DCI blind detection. As an alternative of this option, the UE which has detected the scheduling indicator for itself shall continue the blind physical layer data processing for the CCs which are possibly scheduled and stop the blind physical layer data processing for the CCs which are determined as not scheduled. The UE which has not detected the scheduling indicator for itself shall stop the blind physical layer data processing for all CCs. As another possibility for this option, the downlink control channel, e.g. the PSICH, which carries the scheduling indicator can be either UE specific or multiple UEs can share one PSICH channel for scheduling indicator notification, one common Radio Network Temporary Identifier, RNTI, for PSICH masking can be configured for the UEs that share one PSICH channel.

As a second option, the scheduling indicator can be more specific. By way of example, it can indicate which carrier carries scheduling information. Thus, in this option, the scheduling indicator indicates the scheduling component carriers for mobile entities. As for the first option, the UE which has detected the scheduling indicator for itself can continue DCI blind detection while a UE which has not detected the scheduling indicator shall stop DCI blind detection. In the other alternative, the UE which has detected the scheduling indicator for itself shall continue the DCI blind detection for the CCs which are possibly scheduled and stop the blind detection for the CCs which are determined as not being scheduled,

As an alternative in this second option, the UE may further use the detected scheduling indicator to determine which of the component carriers carries scheduling commands and to process the DCI blind detection only for these determined CCs.

As one embodiment of this second option, the PSICH can be defined as a bitmap to indicate the scheduling of scheduled CCs for one UE. By way of example as shown in Fig. 4, the PSICH could be a bitmap to indicate the scheduling CCs for the UE using up to 32 bits. In the shown 32-bit bitmaps, each bitmap may be set to 1 or 0 to indicate that the corresponding CC is scheduled or that the corresponding CC is not scheduled. It should be understood that the bitmap may have another format. In this option, the scheduling indicator comprises an indicator which indicates which of the component carriers of the carrier aggregation includes resource allocation information for mobile entities. The mobile entity can then process the control information, e.g. downlink control information in accordance with this indicator. This can mean that only the component carriers mentioned in the indicator are checked for resource allocation information during processing or the processing of the component carriers for which the second indicator does not indicate that they contain resource allocation information for the mobile entity is stopped.

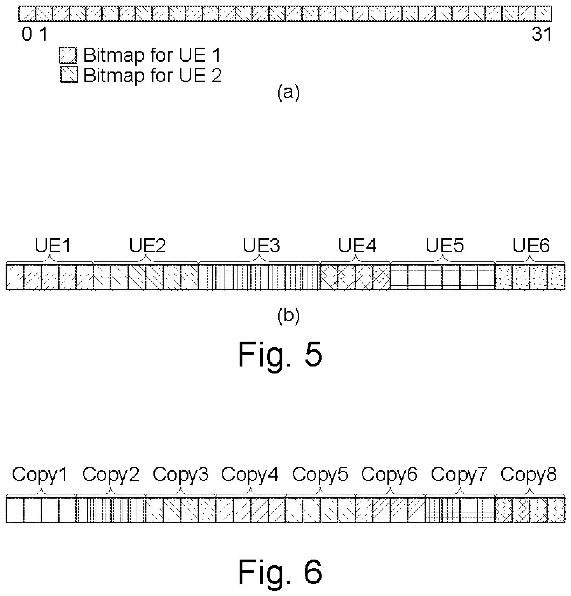

In another embodiment of this format, multiple UEs may share one downlink control channel comprising scheduling information to indicate the scheduled CCs for each UE. One example is illustrated in Fig. 5 which indicates that the bits in the bitmap can be divided into two groups in the upper part of Fig. 5 and into six groups in the lower part of Fig. 5. Each group is used to indicate the scheduling CCs for one UE. In the upper part of Fig. 5, one UE is configured with 16 candidate scheduling CCs. In the lower part of Fig. 5, each UE is configured with different numbers of scheduling CCs and each bit indicates one scheduling CC for one UE. As a further embodiment of this option, when the scheduling CCs for UE are less than the PSICH capacity and the UE takes the whole PSICH, duplicated channel coding can be applied.

Fig. 6 represents one example for scheduling CCs which are configured for one UE and only four bits are needed to indicate the scheduling CCs for the UE. There are eight copies of scheduling indicators to enhance reliability. The duplicated coding rule can be predefined or configured so that the UE can use the duplicated copies in decoding. For instance, the network can configure the UE that duplicated coding is to be applied for the UE. As a seventh embodiment, one bit in the PSICH can either indicate one scheduling CC or scheduling CC set for a UE. When one bit indicates one scheduling CC, at least one scheduling command is carried over the indicated scheduling CC. When one bit indicates one scheduling CC set, it only means that at least one CC within the scheduling CC set carries at least one scheduling command.

The third option for the scheduling indicator discussed is below. The scheduled CC indicator can be in indicator for a UE. Thus, it is a UE specific scheduling indicator. For this scheduled CC indicator, it can either continue the DCI blind detection when the UE has detected the UE for itself or the UE which has not detected the scheduling indicator shall stop the blind DCI detection. As a second embodiment, the UE shall continue the blind detection for the CCs which are possibly scheduled and stop the blind detection for the CCs which are not scheduled.

As an alternative, the scheduling indicator here indicates the scheduled CCs for one UE. As a first alternative of this option, based on the detected scheduled CC information, the UE process DCI blind decoding for only the determined scheduled CCs. This means that the UE only processes DCI blind detection over the DCI search space corresponding to the scheduled CCs. As a fifth alternative for this option, based on the detected scheduled CC information, the UE can continue the blind physical layer data processing for the scheduled CCs and stop the blind physical layer data processing for the non-scheduled CCs.

As a sixth embodiment, the PSICH can be either user specific or multiple UEs share one PSICH. For shared PSICH case, the PSICH is similar to the one discussed above in connection with Fig. 5. The only difference is that each bit in the bitmap indicates one scheduled CC.

As a seventh alternative, one bit in PSICH can either indicate one scheduled CC for a UE or a scheduled CC set. When one bit indicates one scheduled CC, the CC can be determined to be scheduled. When one bit indicates one scheduled CC set, at least one CC within the scheduled set is scheduled for the UE but the UE shall process DCI blind detection for all CCs within the scheduled CC set.

A fourth option is that the scheduling indicator defines the number of scheduled CCs for a UE. The first two alternatives are similar to the first two alternatives mentioned for the first option. As a third alternative of this option, the scheduling indicator carries the number of scheduled CCs for the UE, or as a fourth alternative of this option, certain mapping rules between the number of scheduled CCs and the corresponding DCI search space can be predefined so that one UE can determine the DCI search spaces for DCI blind detection after receiving the scheduled CC indicator. Furthermore, the mapping rules can be configured specifically for each mobile entity.

In the following further options are discussed. By way of example, the scheduling indicator can indicate the scheduling CC such as described above in connection with option two or the scheduled CC of option three can be carried for each UE using carrier specific PSICH. The carrier specific PSICH can be transmitted over the front symbols in the time domain so that the UE can get the information regarding scheduling CC or scheduled CC as early as possible.

As a second alternative, the PSICH can be masked by a UE specific RNTI (Radio Network Temporary Identifier), i.e. FeCA (Further enhancement of Carrier Aggregation) RNTI, so that only the intended UE can decode the PSICH contents. When multiple UEs share one PSICH, one common RNTI shall be configured for these UEs. As a third alternative, the PSICH for a UE can be configured by the base station, eNB, via RRC signaling (Radio Resource Control Signaling) during the CC configuration for the UE. The eNB can determine if to share one PSICH between multiple UEs according to the scheduling indicators.

As a further alternative, the scheduling indicator can be configured to be transmitted by multiple ways. The eNB can select one of the configured ways conditionally. As one example, the eNB can configure to use PSICH channel or one special field in DCI transmission over certain configured CCs to transmit the scheduling indicator for a UE.
- If there is DCI transmission over the configured CC, the eNB can map the scheduling indicator in said special field while PSICH is not used in this case in order to reduce overhead. Otherwise, the eNB can still use PSICH to transmit the scheduling indicator to the UE.
- On the UE side, the UE can blindly detect the scheduling indicator over possible PSICH and DCI channels. The scheduling indicator is determined not to be received when no scheduling indicator is detected via both methods.

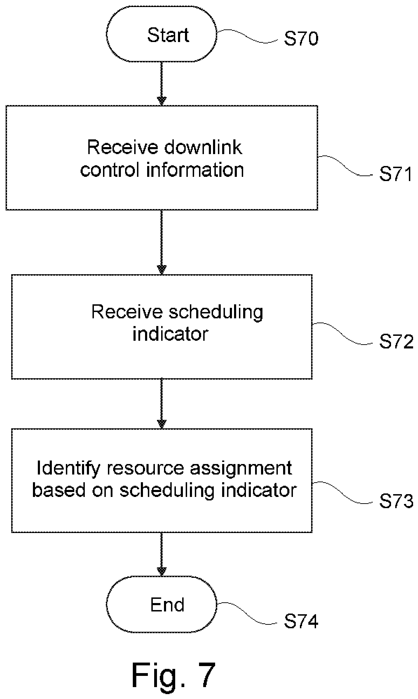

Fig. 7 summarizes the steps carried out at the mobile entity. The method starts in step S70, and in step S71 control information, e.g. downlink control information, is received at the mobile entity. The mobile entity furthermore receives the scheduling indicator in step S72. The scheduling indicator can have the different forms or formats discussed above. The resource assignment information is then identified taking into account the scheduling indicator in step S 73. The method ends in step S74.

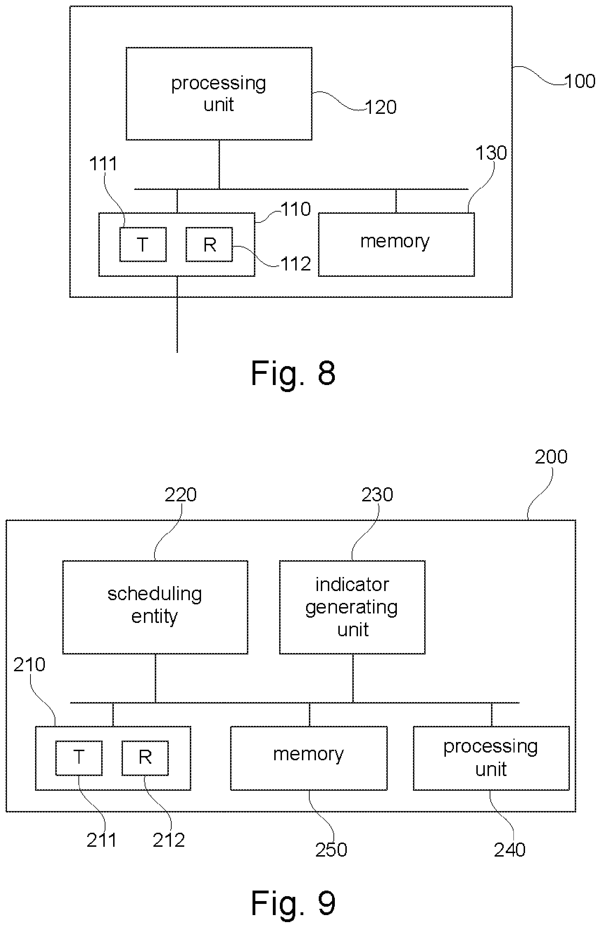

Fig. 8 shows a schematic view of a mobile entity which can carry out the operations in which the mobile entity is involved. The mobile entity comprises an input/output unit 110 comprising a transmitter 111 and a receiver 112. The input/output unit 110 represents the possibility of the mobile entity to communicate with other entities inside or outside a communications network and the input/output unit may be configured to work in accordance with any of the interfaces needed to communicate with other entities. The transmitter provides the possibility to transmit control messages or user data to other nodes or entities while the receiver 112 provides the possibility to receive control messages or user data from other nodes or entities. By way of example, the receiver is configured to receive the control information and the scheduling indicator. The mobile entity furthermore comprises at least one processing unit 120 which is responsible for the operation of the mobile entity 100. The processing unit 120 can generate the commands that are needed to carry out the procedures in which the mobile entity is involved as discussed above. A memory 130 such as a read-only memory, a flash memory, a random access memory, a mass storage or the like can store suitable program code to be executed by the processing unit so as to implement the needed functionalities of the mobile entity 100.

Fig. 9 is the corresponding schematic view of the base station 200 which generates the scheduling indicator. The base station 200 comprises an input/output unit 210 with a transmitter 211 and a receiver 212. The transmitter provides the possibility to communicate with other nodes or with mobile entities, the transmitter providing the possibility to transmit control messages or user data. An example of the control message transmitted by transmitter 212 is the control information and the scheduling indicator. The receiver 212 provides the possibility to receive control messages or user data from other nodes or mobile entities.

A scheduling entity 220 is provided which is configured to schedule the different mobile entities connected to the base station 200. An indicator generating unit 230 is provided which generates the scheduling indicator. As discussed above, different possibilities exist for the scheduling indicator. It should be understood that the scheduling entity 220 and the scheduling indicator generating unit 230 may be implemented in a single functional unit. They need not to be incorporate as separate units as shown. A processing unit 240 is provided which is responsible for the operation of the base station 200 and which generates the commands that are needed to carry out the procedures in which the base station is involved as discussed above. A memory 250 such as a read-only memory, a flash memory, a random access memory, a mass storage or the like can store suitable program code to be executed via the processing unit 240 so as to implement the needed functionalities of the base station 200.

As can be deduced from Fig. 8, a mobile entity configured to process control information is provided comprising a processing unit 120 and a memory, said memory containing instructions executable via said processor, whereby the mobile entity is operative to carry out the different steps of the mobile user entity discussed above or below. Furthermore, a mobile entity configured to process control information is provided comprising a receiver module configured to receive via the downlink control channel the control information. A resource allocation module may be provided configured to process the control information in order to determine the resource allocation information in accordance with the received scheduling indicator.

From the above discussion some general conclusions can be drawn:
By way of example, the control information may only be processed when the scheduling indicator has been received and the presence of the resource allocation information has been identified.

Furthermore, the scheduling indicator may include a first indicator indicating which of the component carriers includes resource allocation information for the plurality of mobile entities, wherein the control information is processed in accordance with this first indicator. In this embodiment it is possible that only the component carriers are checked for resource allocation information during processing for which the first indicator indicates that they comprise resource allocation information for the plurality of mobile entities. As an alternative, the processing of the component carriers for which the first indicator does not indicate that they comprise resource allocation information, may be stopped.

Furthermore, it is possible that the scheduling indicator indicates that the control information include resource allocation information for said mobile entity or not.

Furthermore, a second indicator may be used as scheduling indicator which indicates which of the component carriers includes resource allocation information for said mobile entity, and the control information can be processed in accordance with the second indicator. This can mean that the component carriers mentioned in the second indicator are checked for resource allocation information during processing or it can mean that the processing of the component carriers for which the second indicator does not indicate that they comprise resource allocation information for said mobile entity is stopped.

Furthermore, it is possible that the scheduling indicator is a mobile entity specific indicator. When the mobile entity detects that the scheduling indicator indicates that the scheduling indicator does not relate to the mobile entity, the processing of the mobile entity which processes the control information, may be stopped.

Furthermore, it is possible to use a third scheduling indicator which indicates the number of component carriers which can include resource allocation information. The control information of the different component carriers is then processed in accordance with this third indicator.

The scheduling indicator may be contained in at least one of the component carriers. Furthermore, the scheduling indicator may be received from a base station of the mobile communications network in a separate control channel indicated for the scheduling indicator.

The downlink control channel may be the PDCCH channel and the control information may be downlink control information, DCI.

The above-discussed solution has the following advantages. It reduces the DCI blind detections for both self CC, i.e. own CC, and cross CC scheduling. It reduces the UE power consumption for DCI decoding and reduces the DCI false detection. It reduces the power consumption for the UE front and for blind physical symbol buffering and allows the dynamic use of unlicensed CC to carry scheduling information.

## Claims

1. A method for processing control information at a mobile entity (100) in a mobile communications network configured to use carrier aggregation with at least two component carriers, the method comprising the steps of:
- receiving, via a downlink control channel, the control information, the control information including transmission resource allocation information informing a plurality of mobile entities about which transmission resources the plurality of mobile entities should use,
- receiving a scheduling indicator comprising information about the presence of the resource allocation information in the control information, wherein the scheduling indicator indicates whether the control information include resource allocation information for said mobile entity (100) or not; and
- processing the control information in order to determine the resource allocation information in accordance with the received scheduling indicator, wherein the scheduling indicator is a mobile entity specific indicator, wherein when the mobile entity detects that the scheduling indicator indicates that the scheduling indicator does not relate to the mobile entity (100) processing the control information, the processing of the control information is stopped.

2. The method according to claim 1, wherein the scheduling indicator includes a first indicator indicating which of the at least two component carriers includes resource allocation information for the plurality of mobile entities, wherein the control information is processed in accordance with the first indicator.

3. The method according to claim 2, wherein only those of the at least two component carriers for which the first indicator indicates that they comprise resource allocation information for the plurality of mobile entities are checked for resource allocation information during the processing.

4. The method according to claim 2, wherein the processing for those of the at least two component carriers for which the first indicator does not indicate that they comprise resource allocation information for the plurality of mobile entities is stopped.

5. The method according to any of the preceding claims, wherein the scheduling indicator comprises a second indicator indicating which of the at least two component carriers of the carrier aggregation includes resource allocation information for said mobile entity (100), wherein the control information is processed in accordance with the second indicator.

6. The method according to claim 5, wherein only those of the at least two component carriers that are indicated by the second indicator are checked for resource allocation information during the processing.

7. The method according to claim 5, wherein the processing for those of the at least two component carriers for which the second indicator does not indicate that they comprise resource allocation information for said mobile entity (100) is stopped.

8. The method according to any of the preceding claims, wherein the scheduling indicator comprises a third indicator indicating a number of component carriers, out of the at least two component carriers, that include resource allocation information, wherein the control information of the different component carriers is processed in accordance with the third indicator.

9. The method according to any of the preceding claims, wherein the scheduling indicator is contained in at least one of the at least two component carriers.

10. The method according to any of the preceding claims, wherein the scheduling indicator is received from a base station (200) of the mobile communications network in a separate control channel dedicated for the scheduling indicator.

11. The method according to any of the preceding claims, wherein the downlink control channel is a Physical Downlink Control Channel, PDCCH, and the control information is downlink control information, DCI.

12. A mobile entity (100) configured to process control information of a mobile communications network configured to use carrier aggregation with at least two component carriers, the mobile entity comprising:
- a receiver (112) configured to receive via a downlink control channel, the control information, the control information including transmission resource allocation information informing a plurality of mobile entities about which transmission resources the mobile entities should use, and to receive a scheduling indicator comprising information about the presence of the resource allocation information in the control information, wherein the scheduling indicator indicates whether the control information include resource allocation information for said mobile entity (100) or not; and
- at least one processing unit (120) configured to process the control information in order to determine the resource allocation information in accordance with the received scheduling indicator, wherein the scheduling indicator is a mobile entity specific indicator, wherein when the mobile entity detects that the scheduling indicator indicates that the scheduling indicator does not relate to the mobile entity (100) processing the control information, the processing of the control information is stopped.

## Patentansprüche

1. Verfahren zum Verarbeiten von Steuerinformationen an einer mobilen Einheit (100) in einem Mobilkommunikationsnetz, das konfiguriert ist, um Trägeraggregation mit mindestens zwei Komponententrägern zu verwenden, das Verfahren umfassend die Schritte:
- Empfangen, über einen Downlink-Steuerkanal, der Steuerinformationen, wobei die Steuerinformationen Übertragungsressourcenzuordnungsinformationen einschließen, die eine Vielzahl von mobilen Einheiten darüber informieren, welche Übertragungsressourcen die Vielzahl von mobilen Einheiten verwenden sollte,
- Empfangen eines Planungsindikators, der Informationen über das Vorhandensein der Ressourcenzuordnungsinformationen in den Steuerinformationen umfasst, wobei der Planungsindikator angibt, ob die Steuerinformationen Ressourcenzuordnungsinformationen für die mobile Einheit (100) einschließen oder nicht; und
- Verarbeiten der Steuerinformationen, um die Ressourcenzuordnungsinformationen gemäß dem empfangenen Planungsindikator zu bestimmen, wobei der Planungsindikator ein mobileinheitsspezifischer Indikator ist, wobei, wenn die mobile Einheit erkennt, dass der Planungsindikator angibt, dass sich der Planungsindikator nicht auf die mobile Einheit (100) bezieht, die die Steuerinformationen verarbeitet, die Verarbeitung der Steuerinformationen gestoppt wird.

2. Verfahren nach Anspruch 1, wobei der Planungsindikator einen ersten Indikator einschließt, der angibt, welcher der mindestens zwei Komponententräger Ressourcenzuordnungsinformationen für die Vielzahl von mobilen Einheiten einschließt, wobei die Steuerinformationen gemäß dem ersten Indikator verarbeitet werden.

3. Verfahren nach Anspruch 2, wobei nur diejenigen der mindestens zwei Komponententräger, für die der erste Indikator angibt, dass sie Ressourcenzuordnungsinformationen für die Vielzahl von mobilen Einheiten umfassen, während der Verarbeitung auf Ressourcenzuordnungsinformationen überprüft werden.

4. Verfahren nach Anspruch 2, wobei die Verarbeitung für diejenigen der mindestens zwei Komponententräger, für die der erste Indikator nicht angibt, dass sie Ressourcenzuordnungsinformationen für die Vielzahl von mobilen Einheiten umfassen, gestoppt wird.

5. Verfahren nach einem der vorstehenden Ansprüche, wobei der Planungsindikator einen zweiten Indikator umfasst, der angibt, welcher der mindestens zwei Komponententräger der Trägeraggregation Ressourcenzuordnungsinformationen für die mobile Einheit (100) einschließt, wobei die Steuerinformationen gemäß dem zweiten Indikator verarbeitet werden.

6. Verfahren nach Anspruch 5, wobei nur diejenigen der mindestens zwei Komponententräger, die durch den zweiten Indikator angegeben werden, während der Verarbeitung auf Ressourcenzuordnungsinformationen überprüft werden.

7. Verfahren nach Anspruch 5, wobei die Verarbeitung für diejenigen der mindestens zwei Komponententräger, für die der zweite Indikator nicht angibt, dass sie Ressourcenzuordnungsinformationen für die mobile Einheit (100) umfassen, gestoppt wird.

8. Verfahren nach einem der vorstehenden Ansprüche, wobei der Planungsindikator einen dritten Indikator umfasst, der eine Anzahl von Komponententrägern aus den mindestens zwei Komponententrägern angibt, die Ressourcenzuordnungsinformationen einschließen, wobei die Steuerinformationen der verschiedenen Komponententräger gemäß dem dritten Indikator verarbeitet werden.

9. Verfahren nach einem der vorstehenden Ansprüche, wobei der Planungsindikator in mindestens einem der mindestens zwei Komponententräger enthalten ist.

10. Verfahren nach einem der vorstehenden Ansprüche, wobei der Planungsindikator von einer Basisstation (200) des Mobilkommunikationsnetzes in einem separaten Steuerkanal empfangen wird, der für den Planungsindikator dediziert ist.

11. Verfahren nach einem der vorstehenden Ansprüche, wobei der Downlink-Steuerkanal ein Physical Downlink Control Channel, PDCCH, ist und die Steuerinformationen Downlink-Steuerinformationen, DCI, sind.

12. Mobile Einheit (100), die konfiguriert ist, um Steuerinformationen eines Mobilkommunikationsnetzes zu verarbeiten, das konfiguriert ist, um Trägeraggregation mit mindestens zwei Komponententrägern zu verwenden, wobei die mobile Einheit umfasst:
- einen Empfänger (112), der konfiguriert ist, um über einen Downlink-Steuerkanal die Steuerinformationen zu empfangen, wobei die Steuerinformationen Übertragungsressourcenzuordnungsinformationen einschließen, die eine Vielzahl von mobilen Einheiten darüber informieren, welche Übertragungsressourcen die mobilen Einheiten verwenden sollten, und einen Planungsindikator zu empfangen, der Informationen über das Vorhandensein der Ressourcenzuordnungsinformationen in den Steuerinformationen umfasst, wobei der Planungsindikator angibt, ob die Steuerinformationen Ressourcenzuordnungsinformationen für die mobile Einheit (100) einschließen oder nicht; und
- mindestens eine Verarbeitungseinheit (120), die konfiguriert ist, um die Steuerinformationen zu verarbeiten, um die Ressourcenzuordnungsinformationen gemäß dem empfangenen Planungsindikator zu bestimmen, wobei der Planungsindikator ein mobileinheitsspezifischer Indikator ist, wobei, wenn die mobile Einheit erkennt, dass der Planungsindikator angibt, dass sich der Planungsindikator nicht auf die mobile Einheit (100) bezieht, die die Steuerinformationen verarbeitet, die Verarbeitung der Steuerinformationen gestoppt wird.

## Revendications

1. Procédé de traitement d'informations de commande au niveau d'une entité mobile (100) dans un réseau de communications mobile configuré pour utiliser une agrégation de porteuses avec au moins deux porteuses composantes, le procédé comprenant les étapes consistant à :
- recevoir, via un canal de commande de liaison descendante, les informations de commande, les informations de commande incluant des informations d'allocation de ressources de transmission informant une pluralité d'entités mobiles concernant les ressources de transmission que la pluralité d'entités mobiles doit utiliser,
- recevoir un indicateur de planification comprenant des informations concernant la présence des informations d'allocation de ressources dans les informations de commande, dans lequel l'indicateur de planification indique si les informations de commande incluent des informations d'allocation de ressources pour ladite entité mobile (100) ou non ; et
- traiter les informations de commande afin de déterminer les informations d'allocation de ressources conformément à l'indicateur de planification reçu, dans lequel l'indicateur de planification est un indicateur spécifique d'une entité mobile, dans lequel lorsque l'entité mobile détecte que l'indicateur de planification indique que l'indicateur de planification ne se rapporte pas à l'entité mobile (100) traitant les informations de commande, le traitement des informations de commande est arrêté.

2. Procédé selon la revendication 1, dans lequel l'indicateur de planification inclut un premier indicateur indiquant celle des au moins deux porteuses composantes qui inclut des informations d'allocation de ressources pour la pluralité d'entités mobiles, dans lequel les informations de commande sont traitées conformément au premier indicateur.

3. Procédé selon la revendication 2, dans lequel seules celles des au moins deux porteuses composantes pour lesquelles le premier indicateur indique qu'elles comprennent des informations d'allocation de ressources pour la pluralité d'entités mobiles sont vérifiées pour des informations d'allocation de ressources pendant le traitement.

4. Procédé selon la revendication 2, dans lequel le traitement pour celles des au moins deux porteuses composantes pour lesquelles le premier indicateur n'indique pas qu'elles comprennent des informations d'allocation de ressources pour la pluralité d'entités mobiles est arrêté.

5. Procédé selon l'une quelconque des revendications précédentes, dans lequel l'indicateur de planification comprend un deuxième indicateur indiquant celle des au moins deux porteuses composantes de l'agrégation de porteuses qui inclut des informations d'allocation de ressources pour ladite entité mobile (100), dans lequel les informations de commande sont traitées conformément au deuxième indicateur.

6. Procédé selon la revendication 5, dans lequel seules celles des au moins deux porteuses composantes qui sont indiquées par le deuxième indicateur sont vérifiées pour des informations d'allocation de ressources pendant le traitement.

7. Procédé selon la revendication 5, dans lequel le traitement pour celles des au moins deux porteuses composantes pour lesquelles le deuxième indicateur n'indique pas qu'elles comprennent des informations d'allocation de ressources pour ladite entité mobile (100) est arrêté.

8. Procédé selon l'une quelconque des revendications précédentes, dans lequel l'indicateur de planification comprend un troisième indicateur indiquant un nombre de porteuses composantes, parmi les au moins deux porteuses composantes, qui incluent des informations d'allocation de ressources, dans lequel les informations de commande des différentes porteuses composantes sont traitées conformément au troisième indicateur.

9. Procédé selon l'une quelconque des revendications précédentes, dans lequel l'indicateur de planification est contenu dans au moins l'une des au moins deux porteuses composantes.

10. Procédé selon l'une quelconque des revendications précédentes, dans lequel l'indicateur de planification est reçu d'une station de base (200) du réseau de communications mobiles dans un canal de commande indépendant dédié pour l'indicateur de planification.

11. Procédé selon l'une quelconque des revendications précédentes, dans lequel le canal de commande de liaison descendante est un canal de commande de liaison descendante physique, PDCCH, et les informations de commande sont des informations de commande de liaison descendante, DCI.

12. Entité mobile (100) configurée pour traiter des informations de commande d'un réseau de communications mobiles configuré pour utiliser une agrégation de porteuses avec au moins deux porteuses composantes, l'entité mobile comprenant :
- un récepteur (112) configuré pour recevoir via un canal de commande de liaison descendante, les informations de commande, les informations de commande incluant des informations d'allocation de ressources de transmission informant une pluralité d'entités mobiles concernant les ressources de transmission que les entités mobiles doivent utiliser, et pour recevoir un indicateur de planification comprenant des informations concernant la présence des informations d'allocation de ressources dans les informations de commande, dans laquelle l'indicateur de planification indique si les informations de commande incluent des informations d'allocation de ressources pour ladite entité mobile (100) ou non ; et
- au moins une unité de traitement (120) configurée pour traiter les informations de commande afin de déterminer les informations d'allocation de ressources conformément à l'indicateur de planification reçu, dans laquelle l'indicateur de planification est un indicateur spécifique d'une entité mobile, dans laquelle lorsque l'entité mobile détecte que l'indicateur de planification indique que l'indicateur de planification ne se rapporte pas à l'entité mobile (100) traitant les informations de commande, le traitement des informations de commande est arrêté.
